# EUROPÄISCHE PATENTANMELDUNG

(11) **EP 0 680 868 A1**
(43) Veröffentlichungstag der Anmeldung: **08.11.1995**
(21) Anmeldenummer: 95106677.8
(22) Anmeldetag: 04.05.1995
(51) Int. Cl.: B62D 25/18, B62D 25/16

(54) **Kotflügel, insbesondere für Lastkraftwagen**

(30) Priorität: 06.05.1994 DE 4416036
(71) Anmelder: KÖVER GMBH & CO. KG Metall- und Kunststoffverarbeitung, D-21614 Buxtehude (DE)
(72) Erfinder: Jürges, Heinz-Henning, D-21614 Buxtehude (DE)
(74) Vertreter: Grättinger & Partner

(57) **Zusammenfassung**

Ein Kotflügel 1 für Lastkraftwagen besitzt einen Schmutzfänger 2, der über eine Knickkante mit dem Kotflügel verbunden ist bzw. dicht unterhalb des Kotflügels eine Knickkante aufweist. Die Knickkante 3 erlaubt ein Ausknicken des Schmutzfängers 2 nur nach rückwärts, und zwar solange, bis eine Anschlagstellung erreicht ist.

## Beschreibung

Die Erfindung betrifft einen Kotflügel, insbesondere für Lastkraftwagen, mit einem in Verlängerung des rückwärtigen Bogens angebrachten Schmutzfänger, welcher entweder einstückig mit dem Kotflügel ausgebildet ist oder im Bereich der Unterkante seines hinteren Bogens befestigt ist.

Derartige Schmutzfänger sind außer bei Lastkraftwagen bei allen Nutzfahrzeugen ab bestimmten Reifengrößen vorgeschrieben.

Nach einer den Spritzschutz betreffenden EWG-Verordnung 91/226/EWG Anh. III ist u. a. vorgesehen, daß Schmutzfänger durch eine im Abstand von 50 mm oberhalb ihrer Unterkante angebrachte Kraft von 3 N je 100 mm Breite um nicht mehr als 100 mm nach hinten abgelenkt werden.

Außerdem sieht diese Vorschrift vor, daß der Schmutzfänger in seiner Grundstellung annähernd senkrecht zur Straßenoberfläche verläuft und daß der Abstand der Unterkante vom Boden höchstens 200 mm beträgt.

In der Praxis bedeutet dies, daß die üblichen, verhältnismäßig starr ausgebildeten Schmutzfänger bei entsprechender Beladung des Lkw nur noch einen Bodenabstand von ca. 100 mm aufweisen. In diesem Fall, aber auch bei entsprechend kleinräumigen Bodenerhöhungen, insbesondere beim Überfahren von Bordsteinkanten kommt es daher häufig vor, daß die Unterkante des Schmutzfängers auf eine Bodenerhöhung aufschlägt, was in vielen Fällen zu einer Zerstörung des Schmutzfängers führt. Sind Kotflügel und Schmutzfänger einstückig ausgebildet, so ist der Kotflügel insgesamt zu erneuern. Es kann sogar vorkommen, daß bei der einstückigen Ausführungsform auch noch die Halterung des Kotflügels beschädigt wird.

Demgegenüber liegt der vorliegenden Erfindung die Aufgabe zugrunde, einen Kotflügel der eingangs genannten Art dahingehend zu verbessern, daß er Stöße aufnehmen kann ohne zu brechen bzw. zu reißen und daß er andererseits den oben zitierten Vorschriften genügt, d. h. daß die maximal zulässige Auslenkung auch bei hohen Fahrgeschwindigkeiten des Lkw nicht überschritten wird.

Erfindungsgemäß wird diese Aufgabe gemäß dem Kennzeichen von Anspruch 1 gelöst. Der Anschlag zur Begrenzung der Auslenkung stellt sicher, daß die bestehenden Vorschriften eingehalten werden.

Im Falle der Ausgestaltung gemäß Anspruch 2 ist darauf zu achten, daß der Winkel zwischen den Schenkelleisten unter Berücksichtigung der Höhe der Knickkante über dem Boden derart gewählt wird, daß die geradlinig gemessene maximal zulässige Auslenkung der Unterkante des Schmutzfängers eingehalten wird.

Dadurch daß die Knickkante so ausgestaltet ist, daß sie nur eine Auslenkung des Schmutzfängers nach rückwärts erlaubt, ist eine entsprechende Flexibilität des Schmutzfangers im Falle von Stößen, die im wesentlichen in seiner Längsrichtung auf ihn einwirken, gegeben; der Schmutzfänger weicht bei entsprechender Krafteinwirkung im Rahmen des zur Verfügung stehenden Anschlagwinkels nach rückwärts aus, ohne daß es dabei zu einer Beschädigung oder gar einer Zerstörung des Schmutzfängers oder des Kotflügels kommt.

In Extremfällen kann man nicht gänzlich ausschließen, daß der Schmutzfänger z. B. beim Rückwärtsrangieren, zwischen einem Bordstein und dem Reifen erfaßt wird, ohne daß er ausweichen kann. In einem solchen Fall bildet die Knickkante eine Abrißkante, d. h. sie verhindert im übrigen eine Zerstörung des Kotflügels bzw. der Kotflügelaufhängung. Im Falle einer zweiteiligen Ausbildung von Kotflügel und Schmutzfänger wird der der Befestigung dienende Rest des zerstörten Schmutzfängers entfernt und es wird ein neuer Schmutzfänger an der rückwärtigen Unterkante des Kotflügels befestigt.

Um sicher zu stellen, daß der Schmutzfänger bei vertikalen Stauchkräften sofort nach rückwärts ausweicht, ist es vorteilhaft, daß die Schenkelleisten nach vorne vorspringen, wobei sich die Knickkante vor der Ebene des Schmutzfängers befindet.

Im übrigen wird auf die Ausgestaltungen in den Unteransprüchen verwiesen, welche sich insbesondere auf einen einteilig aus Kunststoff, mit entsprechenden elastischen Eigenschaften gefertigten Kotflügel mit Schmutzfänger beziehen.

Ein geeigneter Werkstoff hierfür ist beispielsweise Polyethylen, wobei die Härte so einzustellen ist, daß auch bei hohen Fahrgeschwindigkeiten, also unter entsprechendem Fahrtwinddruck die Formstabilität des Kotflügels und des Schmutzfängers gewährleistet ist. Selbstverständlich kommt es dabei auch noch auf eine geeignete Dimensionierung, insbesondere was die Wandstärke angeht, an.

Im folgenden wird ein Ausführungsbeispiel der Erfindung anhand der Zeichnung beschrieben. Es zeigt
- Fig. 1: einen Querschnitt durch einen hinteren Bogen eines Kotflügels mit angeformtem Schmutzfänger und
- Fig. 2: den Kotflügel gemäß Anspruch 1 mit maximal ausgelenktem Schmutzfänger.

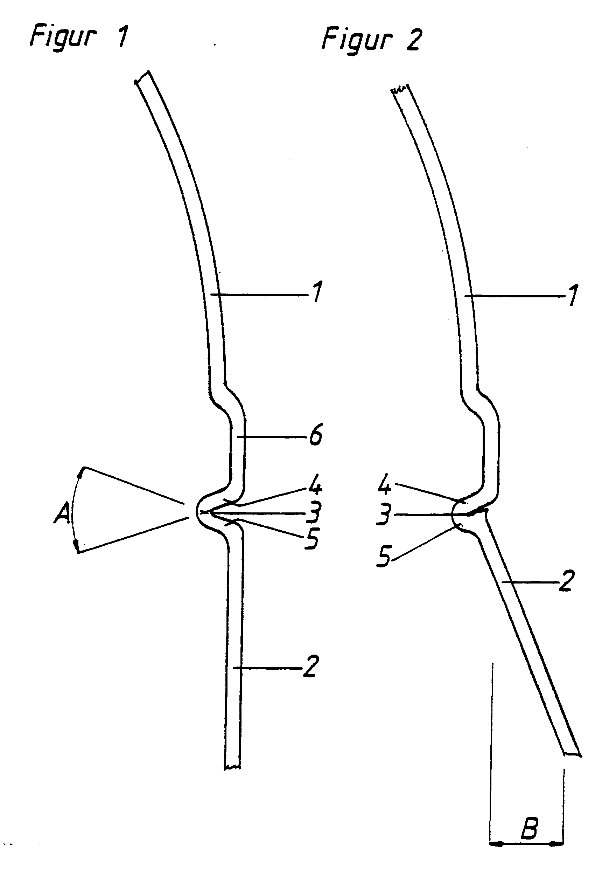

Gemäß Fig. 1 schließt sich an einen Abschnitt des hinteren Bogens eines Kotflügels 1 nach unten ein Schmutzfänger 2 an. Die beiden Teile sind einstückig miteinander verbunden, wobei sie eine gemeinsame Knickkante 3 bilden. Diese Knickkante ist ausgebildet zwischen zwei Schenkelleisten 4, 5, welche einen dreieckförmigen Querschnitt aufweisen, d. h., die Ansatzstelle der oberen Schenkelleiste 4 an der Unterkante des Kotflügels 1 und die Ansatzstelle der unteren Schenkelleiste 5 an der Oberkante des Schmutzfängers 2 ist entsprechend verstärkt ausgebildet. Die beiden Schenkelleisten 4, 5 schließen nach rückwärts miteinander einen Winkel A ein. Dieser ist so gewählt, daß die in Fig. 2 dargestellte maximale Auslenkung B einen zulässigen Wert nicht überschreitet. In der Anschlagsstellung gemäß Fig. 2, welche sich bei hohen Fahrgeschwindigkeiten ergibt, ist der Winkel A zwischen den Schenkelleisten 4, 5 geschlossen.

Um sicherzustellen, daß die Knickkante 3 ein Abknicken ausschließlich nach rückwärts ermöglicht, ist sie gegenüber der Ebene des Schmutzfängers 2 nach vorne verlagert. Im Falle einer Stoßkraft gegen die Unterkante des Schmutzfängers ergibt sich somit automatisch dessen Auslenkung nach rückwärts. In geometrischer Hinsicht sorgt hierfür der durch die Schenkelleisten 4, 5 gebildete Hebelarm bezüglich der Knickkante 3.

Die obere Schenkelleiste 4 geht in den Schenkel eines U-Profils 6 über, welches oberhalb der oberen Schenkelleiste 4 vorgesehen ist und damit praktisch das untere Ende des Kotflügels 1 ausbildet. Dadurch daß dieses U-Profil 6 aus der Ebene des Schmutzfängers bzw. des Kotflügels nach rückwärts ausgeformt ist, können erhebliche Biegekräfte aufgenommen werden, ohne ein Ausbrechen des unteren Endes des Kotflügels befürchten zu müssen.

## Patentansprüche

1. Kotflügel, insbesondere für Lastkraftwagen mit einem in Verlängerung des rückwärtigen Bogens angebrachten Schmutzfänger, welcher entweder einstückig mit dem Kotflügel (1) ausgebildet ist oder im Bereich der Unterkante seines hinteren Bogens befestigt ist, dadurch gekennzeichnet,
- daß eine über die gesamte Breite des Schmutzfängers (2) durchlaufende Knickkante (3) vorgesehen ist, welche entweder die Oberkante des Schmutzfängers (2) bildet oder dicht unterhalb seiner Befestigungsstelle mit dem Kotflügel angeordnet ist,
- daß die Knickkante (3) ein Wegknicken des Schmutzfängers nur nach hinten erlaubt und
- daß der Knickwinkel (A) durch einen Anschlag begrenzt ist.

2. Kotflügel nach Anspruch 1,
dadurch gekennzeichnet,
daß die Knickkante (3) im Scheitel zweier spitzwinkelig nach vorne zusammenlaufender, am Schmutzfänger befestigter oder steif angeformter Schenkelleisten (4, 5) gebildet ist.

3. Kotflügel nach Anspruch 2,
dadurch gekennzeichnet,
daß die Schenkelleisten (4, 5) aus der Schmutzfängerebene nach vorne vorspringend ausgebildet sind.

4. Kotflügel nach Anspruch 2,
dadurch gekennzeichnet,
daß wenigstens der Schmutzfänger (2) einteilig aus hartelastischem Werkstoff gefertigt ist und daß die zwischen den Schenkelleisten gebildete Knickkante (3) durch den schwächsten Querschnitt des Schmutzfängers (2) gebildet ist.

5. Kotflügel nach Anspruch 4,
dadurch gekennzeichnet,
daß die Schenkelleisten (4, 5) im Querschnitt dreieckförmig, zur Knickkante (3) hin zusammenlaufend, ausgebildet sind.

6. Kotflügel nach Anspruch 5,
dadurch gekennzeichnet,
daß die obere Schenkelleiste (4) in den Schenkel eines nach vorne offenen U-Profils (6) übergeht, welches oberhalb der Schenkelleiste (4) und parallel zu dieser verläuft.

7. Kotflügel nach Anspruch 6,
dadurch gekennzeichnet,
daß das U-Profil (6) nach rückwärts aus der Ebene des Schmutzfängers (2) ausgeformt ist.

8. Kotflügel nach Anspruch 2,
dadurch gekennzeichnet,
daß die Schenkelleisten (4, 5) nach rückwärts einen Winkel (A) zwischen sich einschließen, der bei maximaler Auslenkung des Schmutzfängers (2) geschlossen ist, derart, daß die entsprechende Anschlagstellung erreicht ist.
